# EUROPEAN PATENT APPLICATION

(11) **EP 4 704 231 A1**
(43) Date of publication of application: **04.03.2026**
(21) Application number: 25187825.2
(22) Date of filing: 07.07.2025
(51) Int. Cl.: H01M 50/209, H01M 50/291, H01M 50/507, H01M 50/517

(54) **BATTERY ASSEMBLY AND BATTERY PACK**

(30) Priority: 29.08.2024 JP 2024147146
(71) Applicant: Prime Planet Energy & Solutions, Inc., Chuo-ku, Tokyo 103-0022 (JP)
(72) Inventor: INAMURA, Takashi, Tokyo, 103-0022 (JP)
(74) Representative: Kuhnen & Wacker Patent- und Rechtsanwaltsbüro PartG mbB

(57) **Abstract**

A battery assembly includes: a stack (10) including a plurality of battery cells (100) arranged side by side in a first direction; a bus bar module (30) provided on the stack (10); and a fitting member (40) fitted to an end portion of a housing (120) of at least one of the plurality of battery cells (100) in a second direction orthogonal to the first direction. The fitting member (40) has an engagement portion (41), and the engagement portion (41) is engaged with the bus bar module (30) so as to position the bus bar module (30) with respect to the stack (10) at least in the first direction.

## Description

### CROSS REFERENCE TO RELATED APPLICATIONS

This nonprovisional application is based on Japanese Patent Application No. 2024-147146 filed on August 29, 2024 with the Japan Patent Office, the entire contents of which are hereby incorporated by reference.

### BACKGROUND OF THE INVENTION

### Field of the Invention

The present technology relates to a battery assembly and a battery pack.

### Description of the Background Art

Japanese Patent Laying-Open No. 2019-220437 discloses that in a structure in which a bus bar plate (24) is provided on a stack (2) of a plurality of battery cells (21) and an insulating plate (22), a protrusion (221) of the insulating plate (22) is used as a fixture for the bus bar plate (24).

### SUMMARY OF THE INVENTION

It is required to precisely position a bus bar module with respect to a stack of battery cells. Depending on a configuration of a battery assembly, it may be difficult to provide a positioning mechanism. From the viewpoint of improving energy density, it is required to provide a positioning mechanism without diminishing an installation space for the battery cells. In view of the above, there is still room for improvement in the conventional battery assembly.

It is an object of the present technology to provide a battery assembly and a battery pack so as to precisely position a bus bar module while maintaining an installation space for battery cells.

The present technology provides the following battery assembly and the following battery pack.
[1] A battery assembly comprising: a stack including a plurality of battery cells each having a housing that accommodates an electrode assembly, the plurality of battery cells being arranged side by side in a first direction; a bus bar module provided on the stack; and a fitting member fitted to an end portion of the housing of at least one of the plurality of battery cells in a second direction orthogonal to the first direction, wherein the fitting member has an engagement portion, and the engagement portion is engaged with the bus bar module so as to position the bus bar module with respect to the stack at least in the first direction.
[2] The battery assembly according to [1], wherein the bus bar module includes a plate member having a side portion, and a protrusion protruding from the side portion of the plate member in a third direction orthogonal to the first direction and the second direction, and the protrusion is engaged with the engagement portion of the fitting member.
[3] The battery assembly according to [1] or [2], wherein the fitting member is constituted of a sheet member having a thickness of 0.5 mm or less.
[4] The battery assembly according to any one of [1] to [3], further comprising a separator provided between the plurality of battery cells, wherein the fitting member is provided to be separated from the separator in the second direction.
[5] A battery pack comprising: the battery assembly according to any one of [1] to [4]; and a case that has a side wall defining an internal space and that accommodates the battery assembly in the internal space, wherein the side wall directly supports the stack in the battery assembly in the first direction.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an exploded perspective view of a battery pack according to an embodiment.
Fig. 2 is a perspective view of a battery cell according to the embodiment.
Fig. 3 is a top view of a plate member of a bus bar module according to the embodiment.
Fig. 4 is a perspective view showing a state before a fitting member is attached to the battery cell.
Fig. 5 is a perspective view showing a state after the fitting member is attached to the battery cell.
Fig. 6 is a perspective view of the fitting member.
Fig. 7 is a cross sectional view of the battery cell to which the fitting member is attached in the battery assembly.
Fig. 8 is an enlarged view of a portion at which an engagement portion of the fitting member and a protrusion of the bus bar module are engaged with each other.
Fig. 9 is a first diagram showing an exemplary arrangement of a protrusion in the bus bar module.
Fig. 10 is a second diagram showing an exemplary arrangement of protrusions in the bus bar module.
Fig. 11 is a third diagram showing an exemplary arrangement of protrusions in the bus bar module.

### DESCRIPTION OF THE PREFERRED EMBODIMENTS

Hereinafter, embodiments of the present technology will be described. It should be noted that the same or corresponding portions are denoted by the same reference characters, and may not be described repeatedly.

It should be noted that in the embodiments described below, when reference is made to number, amount, and the like, the scope of the present technology is not necessarily limited to the number, amount, and the like unless otherwise stated particularly. Further, in the embodiments described below, each component is not necessarily essential to the present technology unless otherwise stated particularly. Further, the present technology is not limited to one that necessarily exhibits all the functions and effects stated in the present embodiment.

It should be noted that in the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms permit manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (for example, the entire mechanism is reversed upside down).

In the present specification, the term "battery" is not limited to a lithium ion battery, and may include other batteries such as a nickel-metal hydride battery and a sodium-ion battery. In the present specification, the term "electrode" may collectively represent a positive electrode and a negative electrode. Further, the term "electrode plate" may collectively represent a positive electrode plate and a negative electrode plate.

In the present specification, the "battery cell" can be mounted on vehicles such as a hybrid electric vehicle (HEV), a plug-in hybrid electric vehicle (PHEV), and a battery electric vehicle (BEV). It should be noted that the use of the "battery cell" is not limited to the use in a vehicle.

In the present embodiment, a Y axis direction is referred to as a "first direction", a Z axis direction is referred to as a "second direction", and an X axis direction is referred to as a "third direction". The Y axis, the Z axis, and the X axis are orthogonal to one another.

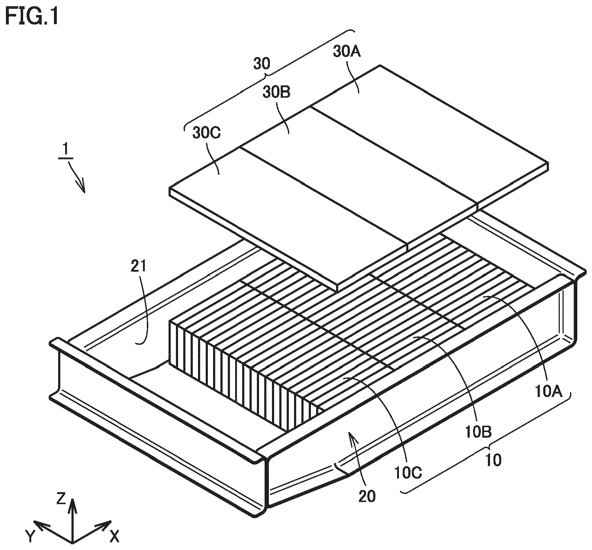

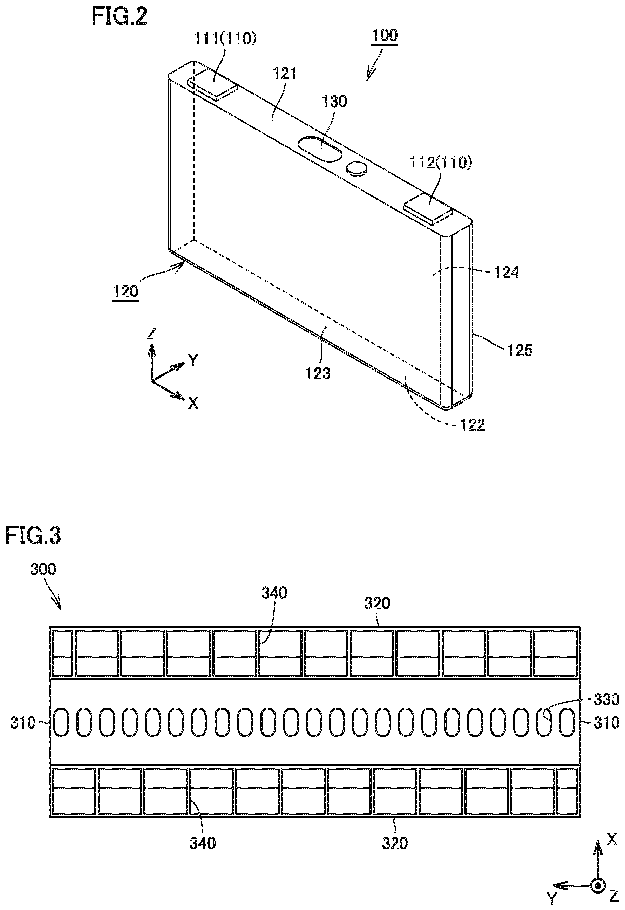

Fig. 1 is an exploded perspective view of a battery pack 1. As shown in Fig. 1, battery pack 1 includes: stacks 10 each including a plurality of battery cells 100 (see Fig. 2) arranged side by side in the Y axis direction; a case 20 that accommodates stacks 10; and bus bar modules 30 disposed on stacks 10.

Stacks 10 include a stack 10A (first stack), a stack 10B (second stack), and a stack 10C (third stack). Stack 10A and stack 10B are adjacent to each other in the X axis direction. Stack 10B and stack 10C are adjacent to each other in the X axis direction. The number of stacks 10 can be appropriately changed.

Case 20 has side walls 21 facing stack 10A, stack 10B, and stack 10C in the Y axis direction. Side walls 21 define an internal space of case 20 that accommodates stack 10. Side walls 21 directly support stack 10A, stack 10B, and stack 10C from both sides in the Y axis direction. Thus, battery pack 1 according to the present embodiment employs a Cell-to-Pack structure in which stacks 10 each including the plurality of battery cells 100 are directly accommodated in the case.

Bus bar modules 30 include: a bus bar module 30A (first bus bar module) disposed on stack 10A; a bus bar module 30B (second bus bar module) disposed on stack 10B; and a bus bar module 30C (third bus bar module) disposed on stack 10C. Bus bar module 30A, bus bar module 30B, and bus bar module 30C have the same configuration in the present embodiment, but may have different configurations.

Fig. 2 is a perspective view showing a configuration of a battery cell 100 included in each of stack 10A, stack 10B, and stack 10C. As shown in Fig. 2, battery cell 100 has a prismatic shape. Battery cell 100 has electrode terminals 110, a housing 120, and a gas-discharge valve 130.

Electrode terminals 110 are formed on housing 120. Electrode terminals 110 have a positive electrode terminal 111 and a negative electrode terminal 112 as two electrode terminals 110 arranged side by side along the X axis direction orthogonal to the Y axis direction. Positive electrode terminal 111 and negative electrode terminal 112 are provided to be separated from each other in the X axis direction.

Housing 120 has a substantially rectangular parallelepiped shape. An electrode assembly (not shown) and an electrolyte solution (not shown) are accommodated in housing 120. Housing 120 includes an upper surface 121, a lower surface 122, a first side surface 123, a second side surface 124, and a pair of third side surfaces 125.

Upper surface 121 is a flat surface orthogonal to the Z axis direction. Electrode terminals 110 are disposed on upper surface 121. Lower surface 122 faces upper surface 121 along the Z axis direction orthogonal to the Y axis direction and the X axis direction.

Each of first side surface 123 and second side surface 124 is constituted of a flat surface orthogonal to the Y axis direction. Each of first side surface 123 and second side surface 124 has the largest area among the areas of the plurality of side surfaces of housing 120. Each of first side surface 123 and second side surface 124 has a rectangular shape when viewed in the Y axis direction. Each of first side surface 123 and second side surface 124 has a rectangular shape in which the X axis direction corresponds to the long-side direction and the Z axis direction corresponds to the shortside direction when viewed in the Y axis direction.

The plurality of battery cells 100 are stacked such that first side surfaces 123 of battery cells 100, 100 adjacent to each other in the Y direction face each other and second side surfaces 124 of battery cells 100, 100 adjacent to each other in the Y axis direction face each other. Thus, positive electrode terminals 111 and negative electrode terminals 112 are alternately arranged in the Y axis direction in which the plurality of battery cells 100 are stacked.

Gas-discharge valve 130 is provided in upper surface 121. When internal pressure of housing 120 becomes more than or equal to a predetermined value due to gas generated inside housing 120, gas-discharge valve 130 is opened to discharge the gas to the outside of housing 120.

Fig. 3 is a top view of a plate member 300 included in bus bar module 30. Each of bus bar module 30A, bus bar module 30B, and bus bar module 30C includes plate member 300 shown in Fig. 3.

As shown in Fig. 3, plate member 300 includes: end surfaces 310 located at end portions in the Y axis direction; end surfaces 320 located at end portions in the X axis direction; through holes 330; and wall portions 340 that partition a space on plate member 300 into a plurality of spaces.

Each of through holes 330 is formed at a position corresponding to gas-discharge valve 130 of battery cell 100. Bus bars (not shown) are accommodated in the spaces partitioned by wall portions 340. The bus bars electrically connect electrode terminals 110 of the plurality of battery cells 100.

Plate member 300 is preferably composed of a resin material such as polypropylene (PP) or polybutylene terephthalate (PBT), for example. Moreover, the thickness of plate member 300 is preferably about 0.5 mm or more and 1.0 mm or less. However, the material and thickness of plate member 300 are not limited to the above ranges.

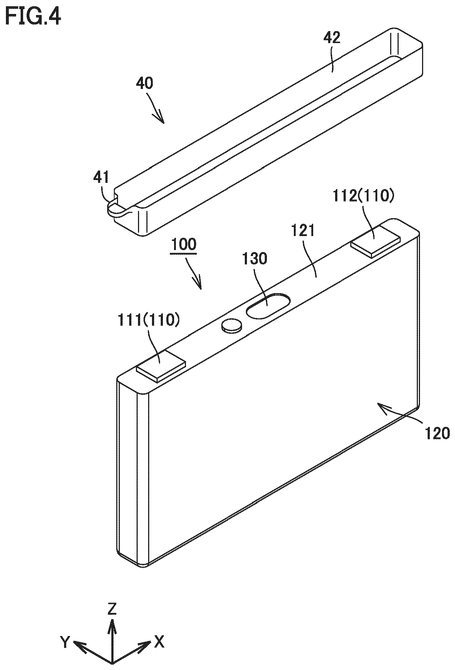

In battery pack 1 according to the present embodiment, a fitting member 40 shown in Figs. 4 to 6 is used as a positioning mechanism for positioning each of bus bar modules 30A, 30B, and 30C with respect to a corresponding one of stacks 10A, 10B, and 10C.

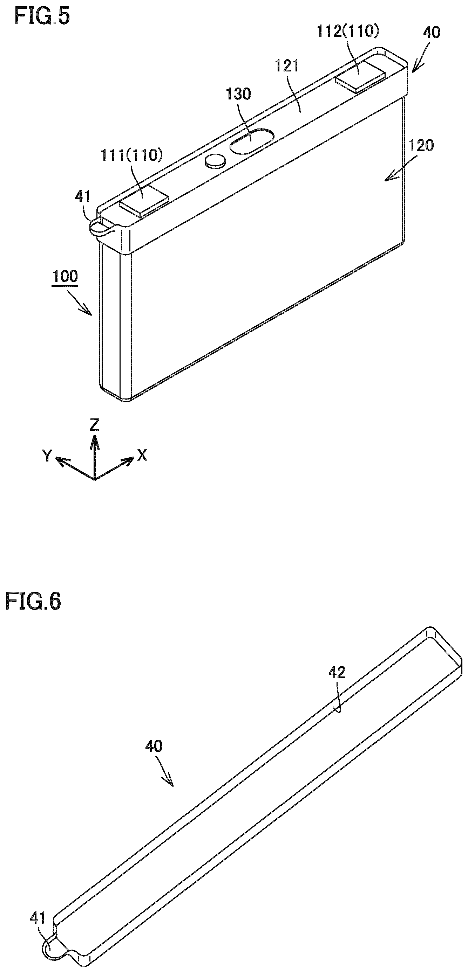

Fig. 4 shows a state before fitting member 40 is attached to battery cell 100, and Fig. 5 shows a state after fitting member 40 is attached to battery cell 100. Fig. 6 is a perspective view showing fitting member 40 detached from battery cell 100.

As shown in Figs. 4 and 5, fitting member 40 is fitted to the upper end portion (end portion on the electrode terminal 110 side in the Z axis direction) of housing 120 of battery cell 100 in the Z axis direction. Fitting member 40 has an engagement portion 41 (receiving portion) for positioning, and is provided with an opening 42. Housing 120 of battery cell 100 is fitted to the inner periphery of opening 42.

In the example of Figs. 4 to 6, engagement portion 41 is provided only on one side in the X axis direction, but engagement portions 41 may be provided on both sides in the X axis direction.

Fitting member 40 can be attached to any battery cell 100 among the plurality of battery cells 100 included in each of stacks 10A, 10B, and 10C.

Fitting member 40 is preferably constituted of a sheet member having an insulating property and thinner than plate member 300. Engagement portion 41 of fitting member 40 is preferably formed by compression molding or vacuum molding.

Fitting member 40 is preferably composed of a material having a noncombustible property. Examples of the material having the noncombustible property include polyvinyl chloride (PVC), polypropylene (PP), polycarbonate (PC), and the like. The sheet member constituting fitting member 40 preferably has a thickness of about 0.5 mm or less. However, the material and thickness of fitting member 40 are not limited to the above ranges.

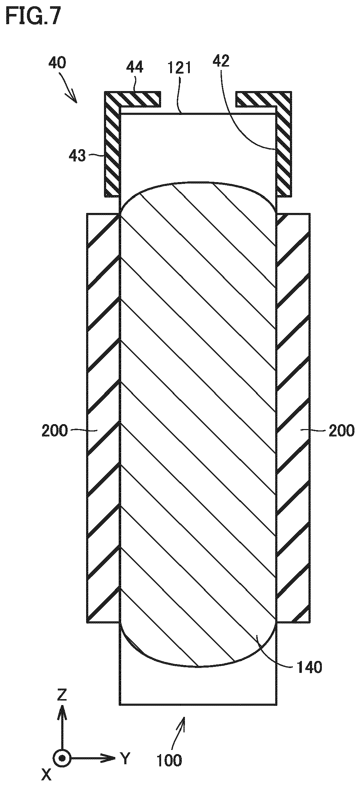

Fig. 7 is a cross sectional view of battery cell 100 to which fitting member 40 is attached. As shown in Fig. 7, in stack 10 in which the plurality of battery cells 100 are arranged in the Y axis direction, separators 200 are provided on both sides with respect to battery cell 100 (separator 200 is provided between adjacent battery cells 100). In the example of Fig. 7, each of separators 200 is provided in a range in which electrode assembly 140 of battery cell 100 is in abutment with the inner surface of housing 120 in the Z axis direction. However, separator 200 may be formed to be longer than that in the state shown in Fig. 7 or shorter than that in the state shown in Fig. 7 in the Z axis direction.

The upper end of separator 200 is provided to terminate at a position lower than upper surface 121 of battery cell 100. Therefore, at the end portion of battery cell 100 on the upper surface 121 side, a clearance corresponding to the thickness of separator 200 is formed to allow fitting member 40 to be installed therein.

As shown in Fig. 7, fitting member 40 includes: a fitting portion 43 to be fitted to housing 120 of battery cell 100; and a folded portion 44 to be folded at upper surface 121 of battery cell 100. By providing folded portion 44 at upper surface 121 of battery cell 100, fitting member 40 can be stably fixed to battery cell 100. However, folded portion 44 may not necessarily be provided.

As shown in Fig. 7, the lower end of fitting portion 43 is provided so as not to interfere with separator 200. That is, fitting member 40 is provided to be separated from separator 200 in the Z axis direction.

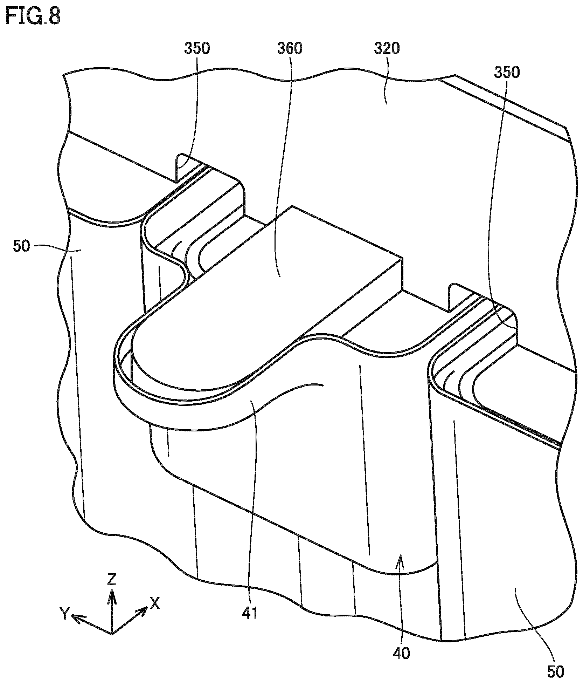

Fig. 8 is an enlarged perspective view showing surroundings around engagement portion 41 of fitting member 40. As shown in Fig. 8, plate member 300 has a protrusion 360 protruding from end surface 320 (side portion) in the X axis direction. Protrusion 360 is engaged with engagement portion 41 of fitting member 40, thereby positioning bus bar module 30 with respect to stack 10.

Housing 120 of battery cell 100 may be covered with a film 50 having an insulating property. Fitting member 40 and film 50 may be provided to protrude to the plate member 300 side with respect to upper surface 121 of battery cell 100 in the Z axis direction. As shown in Fig. 8, plate member 300 disposed on upper surface 121 of battery cell 100 may be provided with a recess 350 through which fitting member 40 and film 50 pass.

In battery pack 1 according to the present embodiment, since stack 10 is directly supported by side walls 21 of case 20, no end plate and no restraint member are provided. Moreover, when an intermediate plate is provided at an intermediate portion of stack 10 in the Y axis direction, the accommodation space for battery cells 100 is occupied by the intermediate plate, thus resulting in decreased energy density of battery pack 1.

In battery pack 1 according to the present embodiment, since fitting member 40 directly attached to battery cell 100 is engaged with bus bar module 30 as described above, bus bar module 30 can be precisely positioned with respect to stack 10. Furthermore, since fitting member 40 is provided so as not to interfere with separator 200 and so as to be accommodated within the thickness of separator 200 in the Y axis direction, the installation space for battery cells 100 is not reduced by providing fitting member 40. Therefore, it is possible to precisely position bus bar module 30 while maintaining the installation space for battery cells 100.

It should be noted that the scope of the present technology is not necessarily limited to the Cell-to-Pack structure, and the present technology can also be applied to a Cell-to-Body structure or a Cell-to-Chassis structure. Further, the present technology may be applied to a Cell-Module-Pack structure.

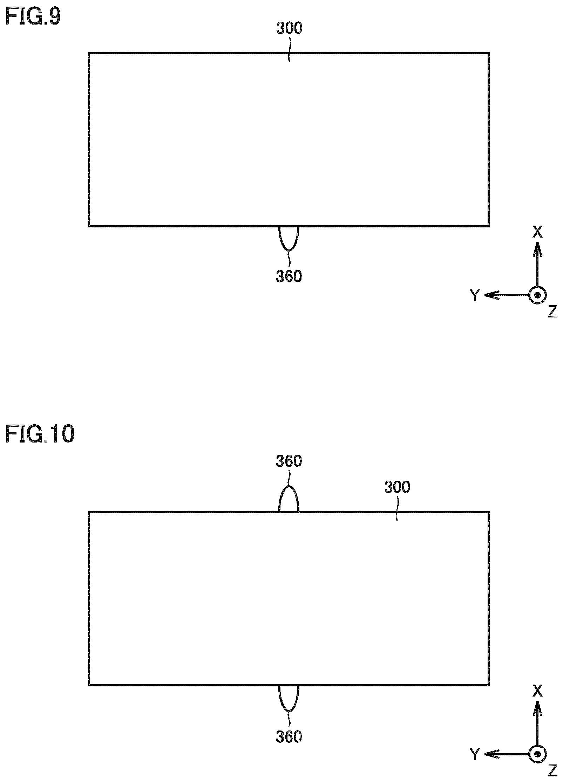

Next, exemplary arrangements of protrusion(s) 360 in plate member 300 of bus bar module 30 will be described with reference to Figs. 9 to 11.

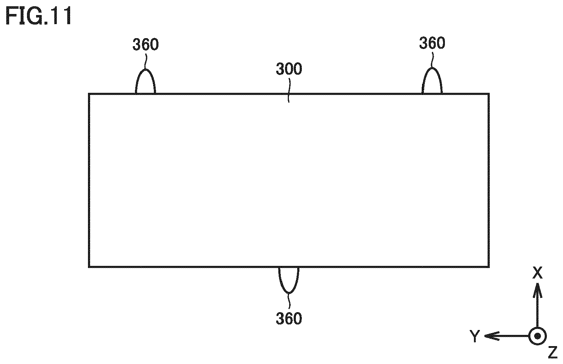

Only one protrusion 360 may be provided in one plate member 300 as shown in Fig. 9, two protrusions may be provided in one plate member 300 as shown in Fig. 10, or three protrusions may be provided in one plate member 300 as shown in Fig. 11. Four or more protrusions 360 may be provided in one plate member 300. In any case, bus bar module 30 is positioned with respect to stack 10 at least in the Y axis direction.

By providing protrusions 360 on both sides in the X axis direction as shown in Figs. 10 and 11, not only the positioning in the Y axis direction but also suppression of rotation (about the Z axis) of plate member 300 can be attained. When protrusions 360 are provided on both sides in the X axis direction, the positions thereof in the Y axis direction may coincide with each other as shown in Fig. 10, or the positions thereof in the Y axis direction may be different as shown in Fig. 11.

In the present embodiment, gas-discharge valve 130 and electrode terminal 110 are disposed at the same surface of housing 120, but the scope of the present technology is not limited thereto, and gas-discharge valve 130 and electrode terminal 110 may be disposed at different surfaces of housing 120. Moreover, electrode terminal 110 may be disposed on a surface (for example, lower surface 122 or third side surface 125) other than upper surface 121, and positive electrode terminal 111 and negative electrode terminal 112 may be disposed on different surfaces (for example, the pair of third side surfaces 125) of housing 120.

Although the embodiments of the present invention have been described and illustrated in detail, it is clearly understood that the same is by way of illustration and example only and is not to be taken by way of limitation. The scope of the present invention is defined by the terms of the claims, and is intended to include any modifications within the scope and meaning equivalent to the terms of the claims.

## Claims

1. A battery assembly comprising:
a stack (10) including a plurality of battery cells (100) each having a housing (120) that accommodates an electrode assembly, the plurality of battery cells (100) being arranged side by side in a first direction;
a bus bar module (30) provided on the stack (10); and
a fitting member (40) fitted to an end portion of the housing (120) of at least one of the plurality of battery cells (100) in a second direction orthogonal to the first direction, wherein
the fitting member (40) has an engagement portion (41), and the engagement portion (41) is engaged with the bus bar module (30) so as to position the bus bar module (30) with respect to the stack (10) at least in the first direction.

2. The battery assembly according to claim 1, wherein
the bus bar module (30) includes a plate member (300) having a side portion, and a protrusion (360) protruding from the side portion of the plate member (300) in a third direction orthogonal to the first direction and the second direction, and
the protrusion (360) is engaged with the engagement portion (41) of the fitting member (40).

3. The battery assembly according to claim 1 or 2, wherein the fitting member (40) is constituted of a sheet member having a thickness of 0.5 mm or less.

4. The battery assembly according to any one of claims 1 to 3, further comprising a separator (200) provided between the plurality of battery cells (100), wherein
the fitting member (40) is provided to be separated from the separator (200) in the second direction.

5. A battery pack (1) comprising:
the battery assembly according to any one of claims 1 to 4; and
a case (20) that has a side wall (21) defining an internal space and that accommodates the battery assembly in the internal space, wherein
the side wall (21) directly supports the stack (10) in the battery assembly in the first direction.
